# EUROPEAN PATENT APPLICATION

(11) **EP 2 664 718 A1**
(43) Date of publication of application: **20.11.2013**
(21) Application number: 13162215.1
(22) Date of filing: 03.04.2013
(51) Int. Cl.: E03B 1/04, E03B 7/04, F16K 31/20, F16K 11/10

(54) **Fluid saving device**

(30) Priority: 03.04.2012 GB 201205961
(71) Applicant: Green Planet (UK) Limited, Birmingham, West Midlands B31 2TS (GB)
(72) Inventor: Dammegard, Ole, Casa 58 Este Poma (ES); Harilela, Mangharam, Birmingham, West Midlands B45 9AY (GB)
(74) Representative: Gosnall, Toby

(57) **Abstract**

A fluid flow control device comprising:
- a fluid inlet (5) arranged in use to be connected to the outlet of a mixer valve or to a heated fluid supply line valve capable of selectively delivering a pressurised heated fluid supply,
- a fluid outlet (7) arranged in use to be connected to a fluid dispenser,
- a through pipe (9) connecting the fluid inlet (5) and outlet (7),
- a valve system (17) and
- a reservoir (11) containing a fluid level device (19),
the valve system (17) being arranged in use to prevent the flow of fluid from the through pipe (9) through the fluid outlet (7), so that fluid entering through the fluid inlet (5) flows into the reservoir (11) via a reservoir inlet (13) in the through pipe (9), until the fluid in the reservoir (11) reaches a pre-determined level, whereupon the fluid level device (19) is arranged to cause the valve system (17) to allow the flow of fluid through the fluid outlet (7).

## Description

The present invention concerns devices for saving fluid. More specifically the invention concerns fluid flow control devices. The invention may have particular (but not exclusive) application in saving an initial water flow from a hot tap or mixer tap which may otherwise be wasted by a user as a consequence of it being below the desired temperature.

As will be appreciated water conservation can be of great importance, especially where it is in short supply. Additionally the effects of climate change, growing populations and socio-economic changes may tend to create further pressure on regional water supplies in the future.

One obvious existing area where fluid is wasted is in the discard of fluid that has not yet reached a desired temperature. By way of example users of hot taps and showers will often allow an initial water flow to pass to a drain without use in view of the water not being at a desired temperature. The undesirably low initial temperature may for example be caused by water in the pipe-work between a water heater and the tap/shower having cooled over time. This must then be dispensed before water heated by the water heater is delivered.

If such initial fluid flows could be saved and re-used in a manner acceptable to the user, both fluid supply demand and fluid treatment pressures could be reduced.

According to a first aspect of the invention a fluid flow control device is provided comprising:
- optionally a fluid inlet arranged in use to be connected to the outlet of a mixer valve or to a heated fluid supply line valve optionally capable of selectively delivering a pressurised heated fluid supply,
- optionally a fluid outlet optionally arranged in use to be connected to a fluid dispenser,
- optionally a through pipe optionally connecting the fluid inlet and outlet,
- optionally a valve system and
- optionally a reservoir optionally containing a fluid level device,

the valve system being optionally arranged in use to prevent the flow of fluid from the through pipe through the fluid outlet, so that fluid entering through the fluid inlet flows into the reservoir via a reservoir inlet in the through pipe, until the fluid in the reservoir reaches a pre-determined level, whereupon optionally the fluid level device is arranged to cause the valve system to allow the flow of fluid through the fluid outlet.

This device may allow the saving of fluid that might for example otherwise be wasted as a consequence of it not being at the desired temperature. The fluid flow control device may be relatively simple to retrofit between a heated fluid source (such as a hot tap or mixer tap) and a fluid dispenser (such as a shower). Further the use of the fluid level device may eliminate the need for more expensive and/or less reliable mechanisms for permitting the automatic delivery of fluid once its temperature has been increased. Advantageously the fluid level device may also ensure that reservoir and other components are not stressed, the reservoir being allowed to deplete so as it is not filled and maintained at fluid supply pressure.

In some embodiments when the valve system is preventing the flow of fluid from the through pipe through the fluid outlet, this occurs regardless of the fluid temperature.

In some embodiments the fluid flow control device is arranged so that when fluid is allowed to flow through the fluid outlet, fluid flow is also allowed from the reservoir through the fluid outlet. In this way accumulated fluid in the reservoir may be used rather than wasted. Further because it is mixed with incoming heated fluid its overall effect on the temperature of the fluid reaching the fluid dispenser may be negligible.

In some embodiments the fluid level device is further arranged to cause the valve system to prevent flow of fluid into the reservoir when the fluid in the reservoir reaches the pre-determined level. In this way it may be that once a reservoir cycle has been completed, the incoming fluid (which is likely up to temperature) is not unnecessarily diverted to the reservoir, instead passing through the through pipe and on to the fluid dispenser.

In some embodiments the fluid level device is a float. As will be appreciated the float may remain on the surface of the fluid in the reservoir and through a mechanical connection to the valve system may allow fluid to pass to the fluid dispenser once the fluid in the reservoir (and so the float) has reached the pre-determined level.

In some embodiments the valve system comprises a valve member arranged to be movable between a first position where it is blocking the fluid outlet and allows flow through the reservoir inlet and a second position where it is blocking the reservoir inlet and allows flow through the fluid outlet. In this way the valve system may only need to comprise a single valve member arranged to interact with multiple valve seats (at least one associated with each of the fluid outlet and reservoir inlet).

In some embodiments the valve member comprises a foil which biases the valve member towards the second position when fluid is flowing past it from the through pipe to the fluid outlet. This may help to maintain the valve member in the second position once the valve member has been moved there and while fluid is being supplied via the fluid inlet.

In some embodiments the valve member comprises a mobile leg, which is arranged to re-orientate under its own weight from a stowed configuration to a supporting configuration as the valve member moves to the second position, the supporting configuration being such that the mobile leg supports the valve member in its second position. This may serve as an additional or alternative method of maintaining the valve member in the second position once the valve member has been moved there.

In some embodiments a flap is positioned in the through pipe and is arranged to re-orientate under its own weight once the pressurised fluid supply is shut-off, the flap being mechanically connected to the mobile leg such that the re-orientation of the flap causes the supporting leg to re-orientate to its stowed configuration. This may ensure that the supporting leg does not prevent closing of the fluid outlet once fluid is no longer being supplied via the fluid inlet (e.g. when a tap has been turned off). In this way, even where the reservoir still contains fluid which is being delivered to the fluid dispenser (as explained below), the contents of the reservoir may be prevented from reaching the fluid dispenser once the pressurised fluid supply has been ceased.

In some embodiments the valve member is biased under its own weight towards the first position. In this way when little or no fluid is flowing past it from the through pipe to the fluid outlet, the valve member may return to the second position. This may allow the valve member to re-set to its first position such that when fluid is next supplied through the fluid inlet it is diverted via the reservoir inlet to the reservoir.

In some embodiments the through pipe is provided with a reservoir outlet through which fluid flows from the reservoir into the through pipe and on to the fluid outlet when the valve system allows fluid flow through the fluid outlet. This may allow fluid in the reservoir to empty into the through pipe and to mix with incoming fluid from the fluid inlet once the pre-determined level has been reached. In this way fluid in the reservoir may be passed to the fluid dispenser so as it is not wasted. Furthermore if the fluid in the reservoir is not at the desired temperature it is nonetheless mixed with incoming fluid such that it may have little effect on the temperature of fluid reaching the fluid dispenser.

In some embodiments the reservoir inlet and outlet are positioned so as to create a fluid re-circulation loop whereby fluid entering the reservoir is circulated from the reservoir, along at least a portion of the through pipe and back into the reservoir indefinitely until the valve system allows the flow of fluid through the fluid outlet. In this way the fluid in the reservoir and incoming fluid in the through pipe may be mixed and blended to create a consistent fluid temperature in the reservoir.

In some embodiments fluid flow from the reservoir through the reservoir outlet is controlled by a reservoir outlet valve positioned in the reservoir. When the reservoir outlet valve is open fluid may be free to circulate around the re-circulation loop mentioned above or to leave the reservoir and pass through the fluid outlet. When the reservoir outlet valve is closed the content of the reservoir may be prevented from leaving the reservoir. One consequence of this may be that once liquid fluid in the reservoir has been emptied to a level below the reservoir outlet valve, air in the reservoir may be prevented from entering the through pipe via the reservoir outlet.

As will be appreciated it may be necessary for fluid in the reservoir to reach the level of the reservoir outlet valve before fluid re-circulation commences.

In some embodiments a reservoir outlet valve member of the reservoir outlet valve is arranged to float in liquid. In this way the reservoir outlet valve may allow liquid to pass when surrounded by it, but may also prevent the passage of air when no liquid is present. This may reduce or prevent the occurrence of air bubbles in fluid passing to the fluid dispenser.

In some embodiments a reservoir outlet valve member is connected to a through pipe float positioned in the through pipe so that when in use the pressurised fluid supply delivers fluid to the through pipe, the through pipe float assumes an elevated position and opens the reservoir outlet valve, and when the pressurised fluid supply is cut off the through pipe float assumes a lowered position and closes the reservoir outlet valve. In this way the reservoir outlet valve may be opened when there is a pressurised fluid supply entering through the fluid inlet, thus preparing the reservoir outlet valve to permit re-circulation of fluid and or delivery of reservoir fluid through the fluid outlet.

In some embodiment the connection between the reservoir outlet valve and the through pipe float is provided by a spindle passing through the wall of the through pipe.

In some embodiments a housing is provided around the reservoir outlet valve. The housing may serve to protect the reservoir outlet valve as well as to reduce fluid pressure around it which might otherwise prevent or inhibit its operation.

In some embodiments a linking conduit is provided between the reservoir outlet valve and the through pipe. The linking conduit may facilitate fluid flow towards the reservoir outlet valve.

In some embodiments one or more flow disruption portions are provided proximate the reservoir outlet. The flow disruption portions may create a low pressure region or vortex proximate the reservoir outlet, improving the flow of fluid from the reservoir into the through pipe. The flow disruption portions may for example be one or more fins.

In some embodiments the flow control device forms a part of a closed fluid delivery system between the outlet of the mixer valve or heated fluid supply line valve to the fluid dispenser. Consequently fluid within the system may not be directed to other possible dispense points or fluid circuits and the system may operate more efficiently and effectively. A closed fluid delivery system may also make the device more suitable for retrofitting to existing systems.

In some embodiments an actuator may be provided arranged to optionally override the normal action of the valve member in order to move it to its second position when desired by a user. This may be most useful where the supply is from a mixer tap and it is desirable for unheated fluid to be available immediately. Nonetheless this override may be useful wherever an immediate supply of fluid may be required regardless of its temperature.

In some embodiments the valve system is additionally provided with a thermostat arranged to override the normal action of the valve member in order to move it to its second position when the fluid in the through pipe reaches a particular temperature. This may allow for delivery of fluid earlier, should the fluid temperature in the through pipe reach a desired level.

In some embodiments a control interface is provided to allow a user to select the particular through pipe fluid temperature at which the thermostat overrides the normal action of the valve member. In this way a user may influence the temperature at which fluid is first dispensed and the duration of the delay in fluid dispense.

In some embodiments the flow control device comprises an outer casing containing the reservoir and the through pipe. The outer casing may serve to protect the components enclosed within.

In some embodiments the fluid dispenser comprises a shower head. The fluid flow control device may be particularly useful for use with a shower head because heated water is usually required.

According to a second aspect of the invention a process for fluid flow control is provided comprising the steps of:
- optionally receiving a fluid flow,
- optionally diverting the initial fluid flow into a reservoir,
- optionally determining when a pre-determined fluid level has been reached in the reservoir,
- optionally when the pre-determined level has been reached, directing the fluid flow through a fluid outlet.

This process may allow the saving of fluid that might for example otherwise be wasted as a consequence of it not being at the desired temperature.

In some embodiments the method further comprises the step, when the fluid in the reservoir reaches the pre-determined level, preventing the further flow of fluid into the reservoir.

In some embodiments the method further comprises the step, when the fluid in the reservoir reaches the pre-determined level, directing fluid in the reservoir through the fluid outlet.

According to a third aspect of the invention a fluid flow control device is provided comprising:
- optionally a fluid inlet arranged in use to be connected to the outlet of a mixer valve or to a heated fluid supply line valve optionally capable of selectively delivering a pressurised heated fluid supply,
- optionally a fluid outlet optionally arranged in use to be connected to a fluid dispenser,
- optionally a through pipe optionally connecting the fluid inlet and outlet,
- optionally a valve system and
- optionally a reservoir,
the valve system optionally being capable in use of selectively preventing the flow of fluid from the through pipe through the fluid outlet, so that fluid entering through the fluid inlet flows into the reservoir via a reservoir inlet in the through pipe,
and optionally where further the through pipe is provided with a reservoir outlet, the reservoir inlet and outlet being optionally positioned so as to create a fluid re-circulation loop whereby fluid entering the reservoir is optionally circulated from the reservoir, along at least a portion of the through pipe, back into the reservoir and so on when the valve system is preventing the flow of fluid through the fluid outlet.

This device may allow the saving of fluid that might for example otherwise be wasted as a consequence of it not being at the desired temperature. The fluid flow control device may be relatively simple to retrofit between a heated fluid source (such as a hot tap or mixer tap) and a fluid dispenser (such as a shower). Further the re-circulation loop may mean that fluid in the reservoir is continually mixed thus giving it a more uniform temperature. The re-circulation loop described may also mean that fluid in the reservoir is directly mixed with the incoming heated fluid supply, improving the mixing further. Improving reservoir fluid temperature uniformity may give a more consistent fluid dispense temperature for fluid flowing through the fluid outlet.

As will be appreciated the valve system may allow the flow of fluid from the through pipe through the fluid outlet after a pre-determined duration, or when the fluid has reached a particular level, or in response to the temperature of the fluid in the through pipe and/or reservoir reaching a pre-determined temperature.

In some embodiments the valve system comprises a thermostatically controlled valve, the valve being arranged to prevent fluid flow through the fluid outlet and to divert it into the reservoir via the reservoir inlet when the fluid in the through pipe is below a particular temperature, and to prevent the flow of fluid through the reservoir inlet while allowing fluid flow through the fluid outlet when the fluid in the through pipe is above the particular temperature. The use of the thermostatically controlled valve may mean that as soon as fluid in the through pipe has reached an acceptable temperature, flow to the fluid outlet may be automatically permitted.

In some embodiments a control interface is provided to allow a user to select the particular temperature. In this way a user may influence the temperature at which fluid is first dispensed and the duration of the delay in fluid dispense.

In some embodiments the fluid flow control device further comprises a fluid level device arranged to cause the valve system to allow the flow of fluid through the fluid outlet when the fluid in the reservoir reaches a pre-determined level.

According to a fourth aspect of the invention a process for fluid flow control is provided comprising the steps of:
- optionally receiving a fluid flow,
- optionally diverting the initial fluid flow into a reservoir,
- optionally re-circulating the initial fluid flow between the reservoir and a through pipe supplying the initial fluid flow.

The re-circulation loop described may mean that fluid in the reservoir is directly mixed with the incoming heated fluid supply, improving the mixing. Improving reservoir fluid temperature uniformity may give a more consistent fluid dispense temperature for fluid flowing through the fluid outlet.

The skilled person will appreciate that a feature described in relation to any one of the above aspects of the invention may be applied mutatis mutandis to any other feature of the invention. The use of the fluid level device may eliminate the need for more expensive and/or less reliable mechanisms for permitting the automatic delivery of fluid once its temperature has been increased. Advantageously the fluid level device may also ensure that reservoir and other components are not stressed, the reservoir being allowed to deplete so as it is not filled and maintained at fluid supply pressure.

Embodiments of the invention will now be described with reference to the accompanying Figures, by way of example only, in which:
**Figure 1a** a perspective view showing a fluid flow control device embodiment according to the invention;
**Figure 1b** is a cut-away view showing the fluid flow control device embodiment of Figure 1a;
**Figure 2** is a perspective view showing a valve member in a first position according to an embodiment of the invention;
**Figure 3** is a perspective view showing the valve member of Figure 2 in a second position according to an embodiment of the invention;
**Figure 4** is a perspective view showing the valve member of Figures 2 and 3 according to an embodiment of the invention;
**Figure 5** is a perspective view showing a portion of the fluid flow control device of Figure 1;
**Figure 6a** is a perspective view showing an alternative arrangement to that shown in Figure 5;
**Figure 6b** is a cut-away view showing a portion of the fluid flow control device of Figure 6a;
**Figure 7** is a cut-away view showing another fluid flow control device embodiment according to the invention;
**Figure 8** is a cut-away view showing the fluid flow control device embodiment of Figure 7 in a different mode of operation.

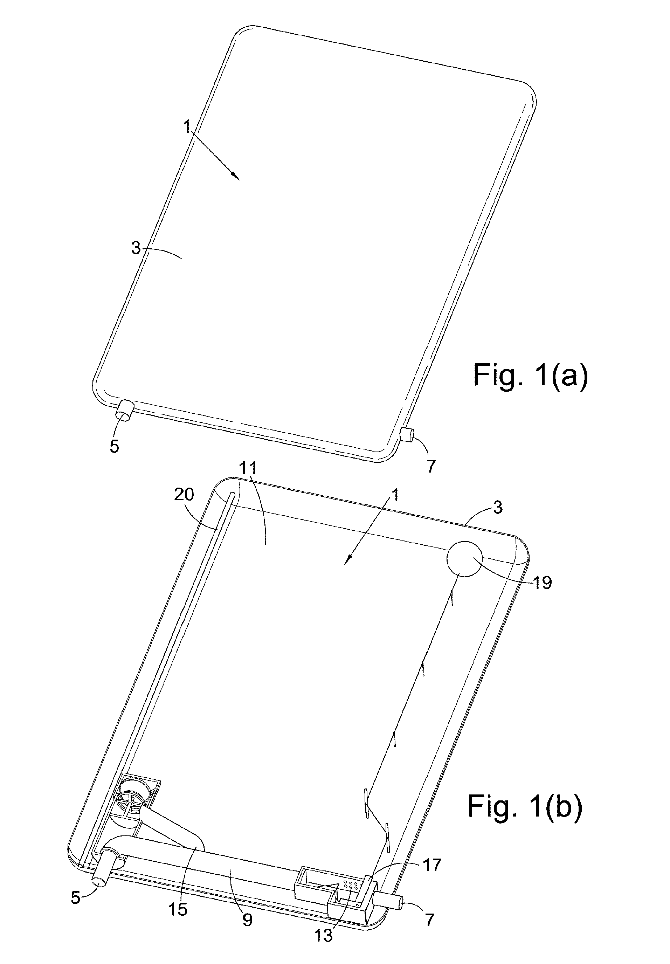

Referring first to Figures 1a and 1b, a fluid flow control device is generally shown at 1. The fluid flow control device 1 has an outer casing 3 passing through which are a fluid inlet 5 and a fluid outlet 7. Connecting the fluid inlet 5 and fluid outlet 7 is a through pipe 9 positioned inside the casing 3. Inside the casing 3 there is also a reservoir 11 which is in fluid communication with the through pipe 9 via reservoir inlet 13 and reservoir outlet 15. A valve system 17 controls fluid flow through the fluid outlet 7 and reservoir inlet 13. A fluid level device (in this case a float 19) influences the configuration of the valve system. An overflow pipe 20 with an inlet in fluid communication with the reservoir 11 and an outlet outside of the casing 3.

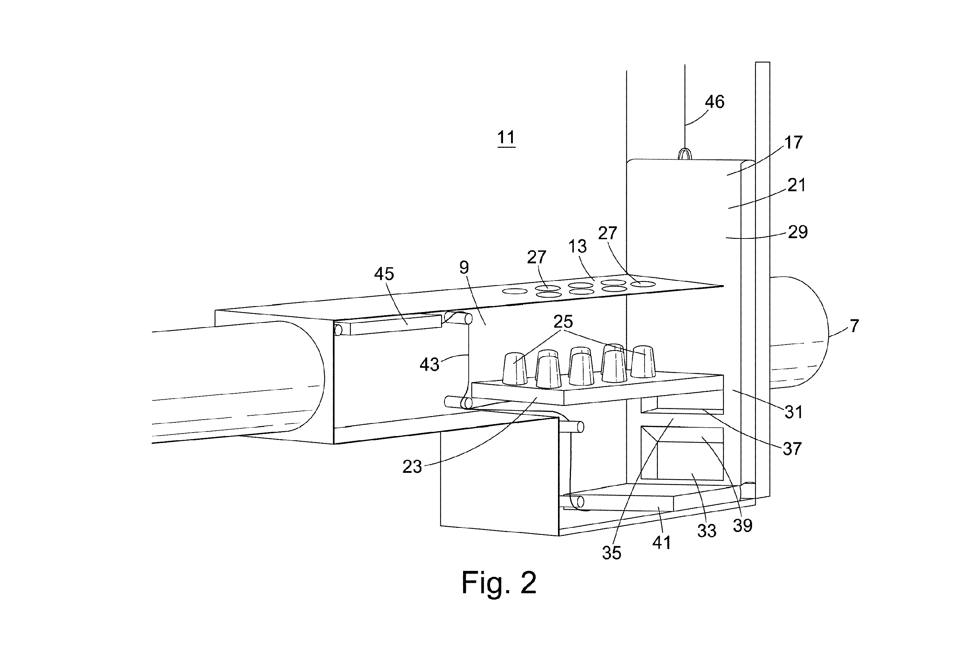

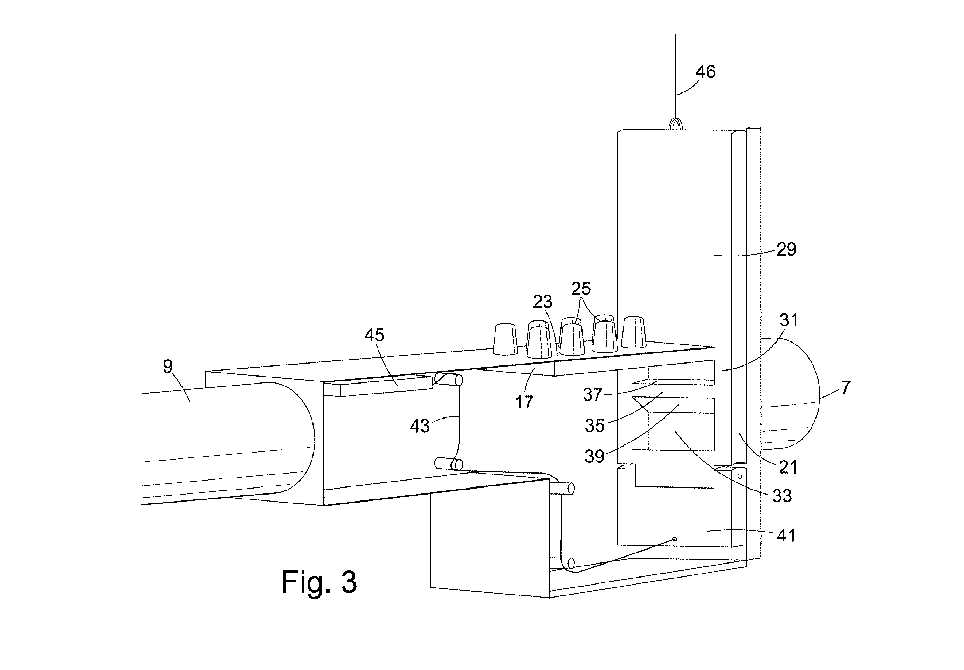

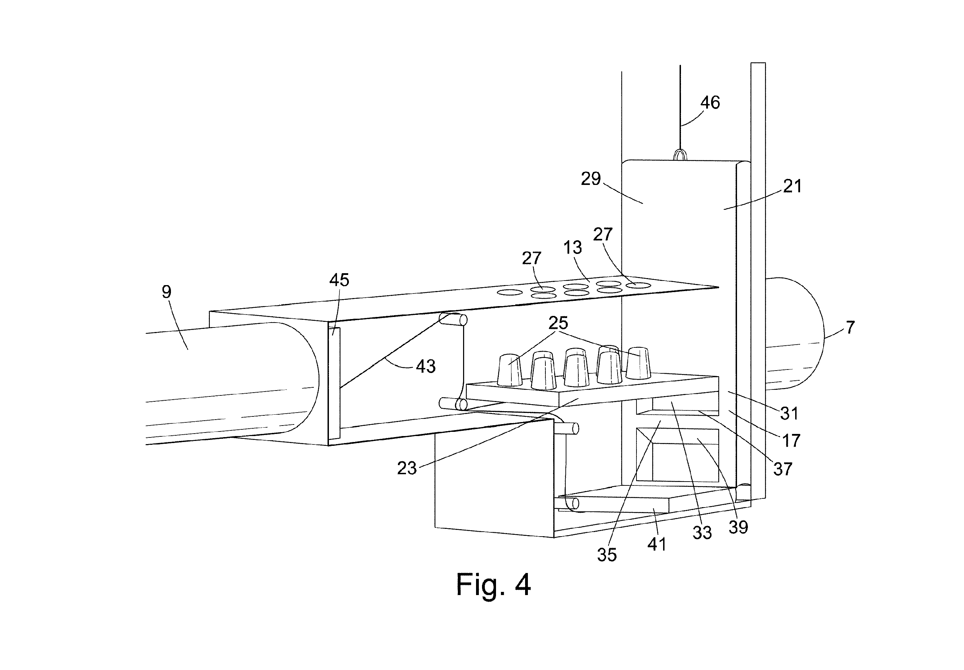

Referring now to Figures 2-4 the valve system 17 is shown in greater detail. The valve system 17 has a valve member 21 which is mobile and may be moved between a lowered first position (shown in Figures 2 and 4) and an elevated second position (shown in Figure 3). The valve member 21 has three plates forming a 'T shape'. A reservoir inlet plate 23 is substantially horizontal and has a series of vertically projecting bungs 25, each of which is aligned with a corresponding reservoir inlet valve seat 27 at the reservoir inlet 13. A fluid outlet blocking plate 29 has a vertical orientation and is blank (i.e. it has no orifice). A fluid outlet flow plate 31 has an orifice 33 divided by a foil 35. The foil 35 has a flat upper surface 37 and a sloped lower surface 39. The direction if slope of the lower surface 39 is such that the foil is narrower proximate the through pipe 9 and wider proximate the fluid outlet 7.

At the base of the valve member 21 is a mobile leg 41. The mobile leg 41 is hinged so that it may be re-orientated between a stowed configuration as shown in Figures 2 and 4 (orientated parallel to the reservoir inlet plate 23) and a supporting configuration as shown in Figure 3 (orientated parallel to the fluid outlet blocking plate 29 and fluid outlet flow plate 31). The base of the mobile leg 41 is connected via a reset chord 43 to a flap 45 positioned in the through pipe 9. The flap 45 is hinged so that it may be re-orientated between a flow configuration as shown in Figures 2 and 3 (orientated parallel to the fluid outlet blocking plate 29 and fluid outlet flow plate 31) and a no-flow configuration as shown in Figure 4 (orientated parallel to the reservoir inlet plate 23).

The valve member 21 is connected to the float 19 via a float chord 46.

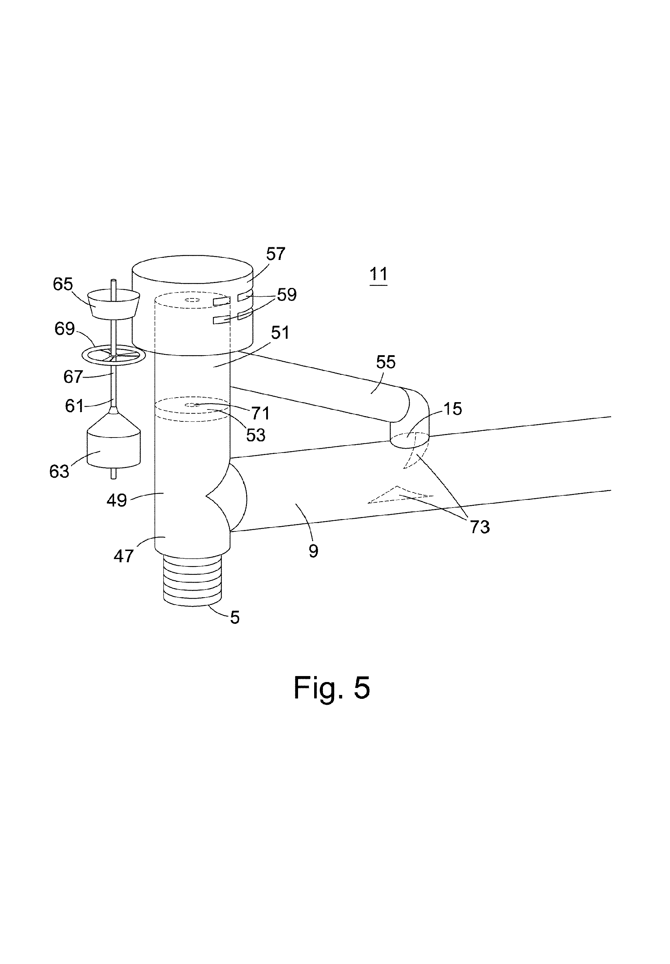

Referring now to Figures 5, fluid inlet 5 and reservoir outlet 15 are described in more detail. Adjacent and in fluid communication with the fluid inlet 5 is a tower pipe 47. A lower portion 49 of the tower pipe 47 is sealed from an upper portion 51 of the tower pipe 47 by a disc 53. The lower portion 49 forms part of the through pipe 9. The upper portion 51 forms part of a linking conduit 55 between a reservoir outlet valve seat (not shown) positioned in the upper portion 51 and the reservoir outlet 15. The upper portion further comprises a series of orifices to allow fluid communication with the reservoir 22. Around part of the upper portion 51 is a protective housing 57, which is also provided with a series of orifices 59 for fluid communication.

Contained within the tower pipe 47 is a float valve assembly 61 (shown outside of the tower pipe 47 for clarity). The float valve assembly 61 comprises a through pipe float 63 connected to a reservoir outlet valve member 65 via a spindle 67. Between the through pipe float 63 and the reservoir outlet valve member 65 is a spindle guide 69. In use the float valve assembly 61 is positioned inside the tower pipe 47, with the through pipe float positioned in the lower portion 49, the spindle guide positioned in the upper portion 51 and the reservoir outlet valve member 65 positioned in the upper portion 51 aligned with the reservoir outlet valve seat (not shown). The spindle 69 passes through the disc 53 via an aperture 71.

In the through pipe 9 at locations adjacent the reservoir outlet 15 are a pair of flow disruption portions (in this case fins 73).

Referring now to Figures 1-5 operation of the fluid flow control device 1 is described. In normal use the fluid inlet 5 is connected to a pipe or conduit and the fluid outlet would normally be connected to a fluid dispenser such as a shower head. The pipe/conduit connected to the fluid inlet 5 should be capable of selectively delivering a pressurised heated fluid supply (e.g. from a boiler). Flow through the connected pipe or conduit would normally be controlled by a tap or mixer valve. Typically where such a tap or valve has not been opened for a period, previously warm fluid in the pipe/conduit may have cooled down. Therefore the pipe or conduit will initially deliver unheated fluid.

As fluid enters the fluid inlet 5 it fills the through pipe 9 including the lower portion 49 of the tower pipe 47. As the fluid reaches the valve system 17 (which is initially in its lowered first position) it is forced through the reservoir inlet 13 into the reservoir 11. This is because the fluid cannot pass through the fluid outlet 7 as it is blocked by the fluid outlet blocking plate 29 and the reservoir inlet plate 23. Consequently this fluid (at least a portion of which is likely unheated as discussed above) therefore begins to fill the reservoir 11.

As the fluid in the reservoir reaches the level of the orifices 59, it passes past the reservoir outlet valve member 65 and its associated valve seat (not shown). This is possible because the valve member 65 has been lifted away from the valve seat by raising of the float valve assembly 61 under the influence of the through pipe float 63. The through pipe float 63 has risen in view of the lower portion 49 of the tower pipe 47 being filled with fluid. Fluid passing the reservoir outlet valve member 65 flows down linking conduit 55 and back into through pipe 9. Entry of this fluid back into the through pipe 9 is facilitated by fins 73, which create a low pressure region in the pressurised fluid flow in the through pipe. The relative positioning of the reservoir inlet 13 and reservoir outlet 15 therefore creates a fluid re-circulation loop between the through pipe 9 and reservoir 11. Fluid in the reservoir is therefore agitated causing mixing and a more uniform fluid temperature in the reservoir 11. Further the direct mixing of fluid entering the fluid inlet 5 with fluid from the reservoir 11 in the through pipe 9 further assists in creating a more uniform temperature in the reservoir (especially because there may be a significant temperature differential between these fluids). Despite fluid exiting the reservoir through reservoir outlet 15, the fluid outlet 7 is still blocked. Therefore fluid entering the reservoir 11 through reservoir inlet 13 continues to fill the reservoir 11 and raise its level.

As the fluid level in the reservoir continues to rise the float 19 rises with it, until at a predetermined height (corresponding to the length of the float chord 46) the float 19 (via the float chord 46) begins to move the valve member 21 into its second (elevated) position. As this occurs the reservoir inlet plate 23, fluid outlet blocking plate 29 and fluid outlet flow plate 31 move upwards. As the valve member 21 reaches its second position the projecting bungs 25 engage the reservoir inlet valve seat 27, preventing further flow of fluid into the reservoir 11. Further the orifice 33 aligns with the fluid outlet 7 such that fluid may flow out of the fluid flow control device 1 for dispense. The valve member 21 is maintained in its second position by the mobile leg 41 and the foil 35. As the valve member 21 is raised the mobile leg 41 re-orientates under its own weight from its stowed configuration to its supporting configuration, thus supporting the valve member 21 in its second position. The shape of the foil 35 creates a pressure differential biasing the valve member 21 towards its second position when fluid flows past it. In this arrangement the valve member 21 is positioned as shown in Figure 3. Fluid entering through fluid inlet 5 now flows through the through pipe 9 and out of fluid outlet 7. Further the reservoir 11 slowly empties of fluid via reservoir outlet 15. Because the initial fluid flow has been stored in the reservoir 11, the fluid entering fluid inlet 5 has had an opportunity to reach a higher temperature and potentially to be mixed with fluid in the reservoir 11. Now therefore dispensed fluid is more likely to be at the desired temperature, and the mixing in of fluid from the reservoir is unlikely to make a substantial difference to the overall temperature of the dispensed fluid (especially if it is metered slowly).

If for any reason the reservoir 11 fills with fluid beyond its design capacity, the fluid will escape from the reservoir 11 via overflow pipe 20, thus preventing damage to the fluid flow control device 1.

Fluid delivery continues in the manner mentioned above until the fluid supply to the fluid inlet 5 is terminated. Once the supply has been terminated there will no longer be a large volume of pressurised fluid flowing through the through pipe and past the foil 35 (even if the reservoir 11 is still emptying). Consequently the flap 45 re-orientates under its own weight from its flow configuration to its no-flow configuration. The flap pulls on reset chord 43, which re-orientates the support leg 41 to its stowed configuration. The re-orientation of the support leg 41 together with the ineffectiveness of the foil 35 (due to little or no fluid flow past it) means that the valve member is free to move back to its first (lowered) position (see Figure 4) under its own weight. Once again therefore the fluid outlet 7 is blocked and no fluid is dispensed. This 'resetting' of the fluid flow control device 1 means that dispense ceases once a user has terminated the fluid supply to the fluid inlet 5 even where the reservoir 11 would otherwise still deliver fluid. The resetting also means that the fluid flow control device 1 is ready to repeat the cycle mentioned above.

Although not provided in the present embodiment an override actuator may be provided for the fluid flow control device 1. This could for example be a manual actuator allowing the valve member 21 to be moved to its second (elevated) position regardless of the fluid level in the reservoir 11. This may be advantageous where a user might require unheated fluid delivery, or fluid delivery at any temperature.

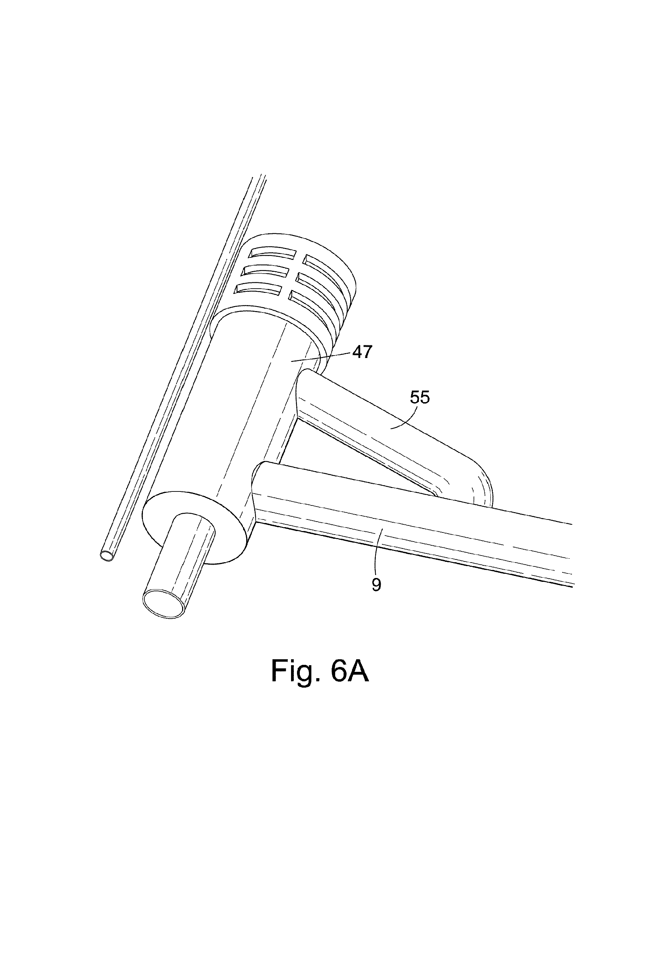

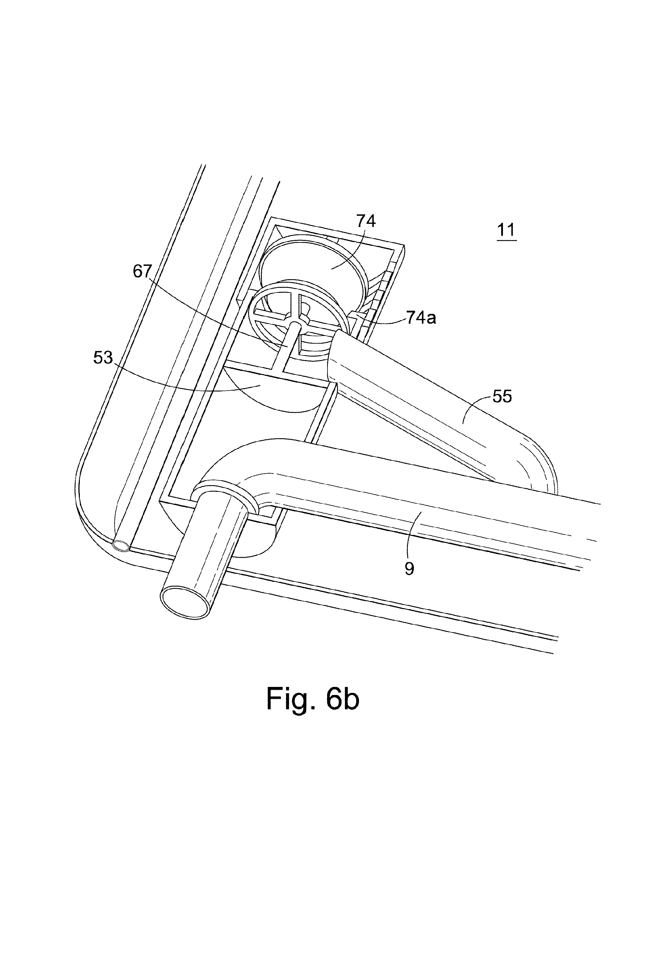

Turning now to Figures 6a and 6b a variation on the float valve assembly 61 of Figure 5 is shown. In this embodiment there is no through pipe float. Instead the reservoir outlet valve member 74 is a float, free to move up and down spindle 67. A fluid flow control device utilising this modified float valve assembly will work in the same was as those described previously with the exception that opening and closing of the reservoir outlet valve member 74 is not controlled by a through pipe float. Instead, if the reservoir outlet valve member 74 is surrounded by liquid it will float away from its reservoir outlet valve seat 74a and consequently allow the liquid to flow. Otherwise the reservoir outlet valve member 74 will close against the valve seat 74a. This may have the advantage that when liquid is available in the reservoir 11 for re-circulation or delivery, the reservoir outlet valve member 74 will be open, whereas when such liquid is not available, air is prevented from passing the reservoir outlet valve member 74 from the reservoir 11 and joining fluid for delivery to a fluid dispenser.

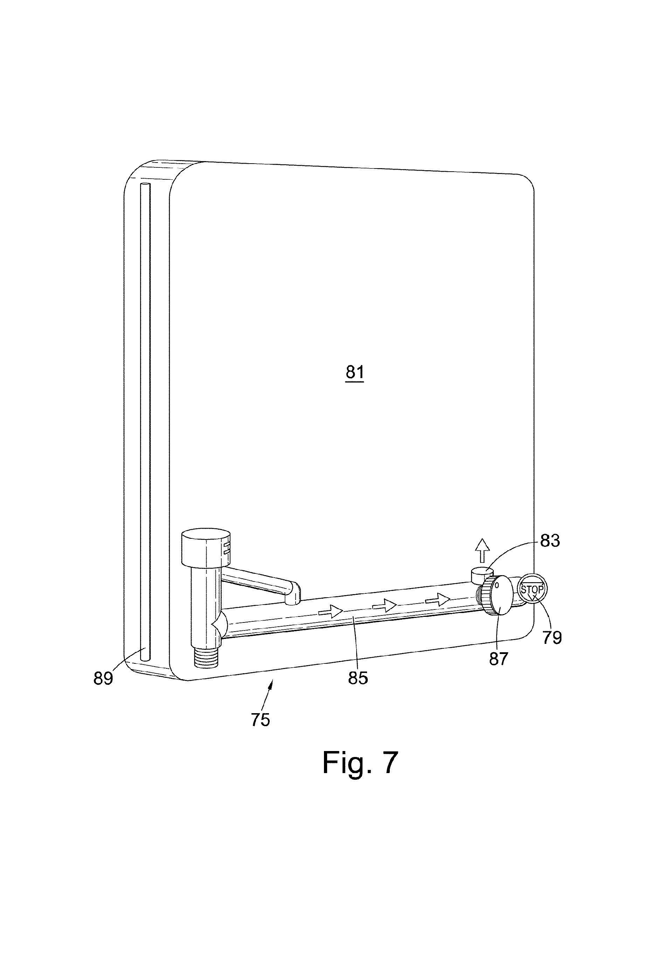

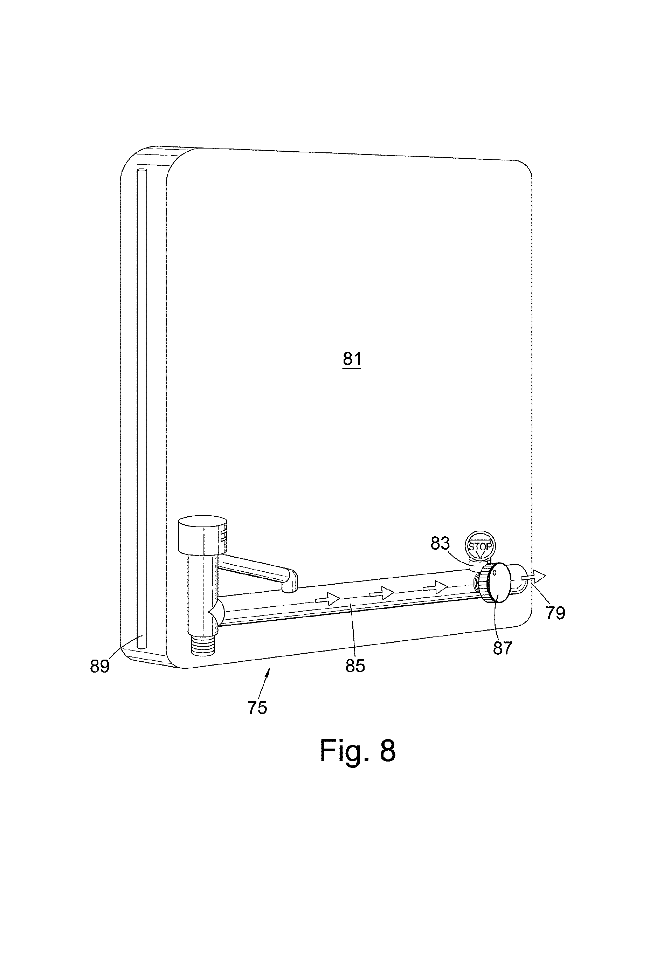

Turning to Figures 7 and 8 an alternative fluid flow control device is generally provided at 75. The fluid flow control device 75 is similar to the previous embodiment, but the valve system 17 and float 19 have been replaced with a thermostatically controlled valve (not shown). The valve prevents fluid flow through a fluid outlet 79 and diverts it into a reservoir 81 via a reservoir inlet 83 when the fluid in a through pipe 85 is below a particular temperature (Figure 7). When the particular fluid temperature is reached in the through pipe 85, the valve prevents the flow of fluid through the reservoir inlet 83 and allows fluid flow through the fluid outlet 79 (Figure 8). A control interface 87 is provided for adjusting the valve, so that the particular temperature at which fluid dispense is permitted can be altered. In other respects the fluid flow control device 75 is the same as the previous embodiment (e.g. the float valve assembly and reservoir outlet).

If for any reason the reservoir fills with fluid beyond its design capacity, (e.g. because the fluid in the through pipe 85 does not reach the particular temperature), the fluid will escape from the reservoir via overflow pipe 89, thus preventing damage to the fluid flow control device 1.

As will be appreciated in some embodiments the technologies mentioned in separate embodiments above could be combined. If a fluid flow control device contained both the valve system 17 and float 19 technology and the thermostatically controlled valve 77 technology, the valve 77 might ensure that fluid is dispensed as soon as a desired temperature is reached, while the valve system 17 and float 19 might ensure that the reservoir is not over-filled.

It will be understood that the invention is not limited to the embodiments above-described and various modifications and improvements can be made without departing from the various concepts described herein. For example one or more magnets may be used to assist in re-orientation of the support leg and/or flap. Further embodiments having different reservoir volumes are envisaged for different applications depending on the required capacity. It is also envisaged that in some embodiments two or more fluid flow control devices could be arranged and connected end to end. Any of the features may be employed separately or in combination with any other features and the invention extends to and includes all combinations and sub-combinations of one or more features described herein in any form of fluid flow control device.

Although the above embodiments are described in the context of an ablutionary shower system for controlling the flow of water, the invention should not be considered to be limited to this application.

## Claims

1. A fluid flow control device comprising:
- a fluid inlet arranged in use to be connected to the outlet of a mixer valve or to a heated fluid supply line valve capable of selectively delivering a pressurised heated fluid supply,
- a fluid outlet arranged in use to be connected to a fluid dispenser,
- a through pipe connecting the fluid inlet and outlet,
- a valve system and
- a reservoir containing a fluid level device,
the valve system being arranged in use to prevent the flow of fluid from the through pipe through the fluid outlet, so that fluid entering through the fluid inlet flows into the reservoir via a reservoir inlet in the through pipe, until the fluid in the reservoir reaches a pre-determined level, whereupon the fluid level device is arranged to cause the valve system to allow the flow of fluid through the fluid outlet.

2. A fluid flow control device according to claim 1 where the fluid flow control device is arranged so that when fluid is allowed to flow through the fluid outlet, fluid flow is also allowed from the reservoir through the fluid outlet.

3. A fluid flow control device according to any preceding claim where either of the following occurs:
a) the fluid level device is further arranged to cause the valve system to prevent flow of fluid into the reservoir when the fluid in the reservoir reaches the pre-determined level; and
b) the fluid level device is a float.

4. A fluid flow control device according to any preceding claim where the valve system comprises a valve member arranged to be movable between a first position where it is blocking the fluid outlet and allows flow through the reservoir inlet and a second position where it is blocking the reservoir inlet and allows flow through the fluid outlet, wherein the valve member is optionally biased under its own weight towards the first position.

5. A fluid flow control device according to claim 4 where the valve member comprises a foil which biases the valve member towards the second position when fluid is flowing past it from the through pipe to the fluid outlet.

6. A fluid flow control device according to claim 4 or claim 5 where the valve member comprises a mobile leg, which is arranged to re-orientate under its own weight from a stowed configuration to a supporting configuration as the valve member moves to the second position, the supporting configuration being such that the mobile leg supports the valve member in its second position.

7. A fluid flow control device according to claim 6 where a flap is positioned in the through pipe and is arranged to re-orientate under its own weight once the pressurised fluid supply is shut-off, the flap being mechanically connected to the mobile leg such that the re-orientation of the flap causes the supporting leg to re-orientate to its stowed configuration.

8. A fluid flow control device according to any preceding claim where the through pipe is provided with a reservoir outlet through which fluid flows from the reservoir into the through pipe and on to the fluid outlet when the valve system allows fluid flow through the fluid outlet.

9. A fluid flow control device according to claim 8 where the reservoir inlet and outlet are positioned so as to create a fluid re-circulation loop whereby fluid entering the reservoir is circulated from the reservoir, along at least a portion of the through pipe and back into the reservoir indefinitely until the valve system allows the flow of fluid through the fluid outlet.

10. A fluid flow control device according to claim 8 or claim 9 where fluid flow from the reservoir through the reservoir outlet is controlled by a reservoir outlet valve positioned in the reservoir.

11. A fluid flow control device according to claim 10 where a reservoir outlet valve member of the reservoir outlet valve is arranged to float in liquid.

12. A fluid flow control device according to claim 10 or claim 11 where a reservoir outlet valve member is connected to a through pipe float positioned in the through pipe so that when in use the pressurised fluid supply delivers fluid to the through pipe, the through pipe float assumes an elevated position and opens the reservoir outlet valve, and when the pressurised fluid supply is cut off the through pipe float assumes a lowered position and closes the reservoir outlet valve.

13. A fluid flow control device according to any of claims 8 to 12 where one or more flow disruption portions are provided proximate the reservoir outlet.

14. A fluid flow control device according to any preceding claim where any of the following occur:
a) the flow control device forms a part of a closed fluid delivery system between the outlet of the mixer valve or heated fluid supply line valve to the fluid dispenser;
b) an actuator is provided arranged to optionally override the normal action of the valve member in order to move it to its second position when desired by a user; and
c) the valve system additionally comprises a thermostat arranged to override the normal action of the valve member in order to move it to its second position when the fluid in the through pipe reaches a predetermined temperature.

15. A process for fluid flow control is provided comprising the steps of:
- receiving a fluid flow,
- diverting the initial fluid flow into a reservoir,
- determining when a pre-determined fluid level has been reached in the reservoir,
- when the pre-determined level has been reached, directing the fluid flow through a fluid outlet.
